# EUROPEAN PATENT APPLICATION

(11) **EP 3 832 494 A1**
(43) Date of publication of application: **09.06.2021**
(21) Application number: 19843817.8
(22) Date of filing: 29.07.2019
(51) Int. Cl.: G06F 16/9035, G10L 13/00, G10L 15/22

(54) **INFORMATION PROCESSING DEVICE AND INFORMATION PROCESSING METHOD**

(30) Priority: 03.08.2018 JP 2018146445
(71) Applicant: Sony Corporation, 108-0075 Tokyo (JP)
(72) Inventor: MIYAZAKI, Chiaki, Tokyo 108-0075 (JP); KANEMOTO, Katsuyoshi, Tokyo 108-0075 (JP); MINAMINO, Katsuki, Tokyo 108-0075 (JP)
(74) Representative: 2SPL Patentanwälte PartG mbB
(86) International application number: PCT/JP2019/029714
(87) International publication number: WO 2020/027073

(57) **Abstract**

An agent system capable of, in multi-party conversation, actively participating in the conversation is achieved.

A response class is decided on the basis of information associated with whether or not a user is attempting to talk with a system and associated with whether or not a possibility that the system has a capability of correctly responding to an utterance of the user is high. In this case, when the user is not attempting to talk with the system and the possibility that the system has the capability of correctly responding to the utterance of the user is high, a response class for proposing an executable task is decided as the response class. A response is generated by a response generation unit on the basis of the decided response class.

## Description

### [Technical Field]

The present technology relates to an information processing device and an information processing method and, more particularly, to an information processing device and an information processing method that are suitable when applied to an agent system or the like that executes a task ordered by a person and has a conversation with the person.

### [Background Art]

Heretofore, agent systems have been proposed which execute a task ordered by a person and have a conversation with the person. This kind of agent system sometimes makes an unnecessary utterance or action when not being spoken to in interaction with persons. In such a case, it follows that a user has an impression that "This machine has responded at a wrong timing" or "This machine has falsely operated." On the other hand, in the case where a period during which the agent system makes no utterance and action continues for a long time, it follows that a user thinks that "This machine has ignored us" or "We cannot use this machine anymore."

For example, in NPL 1, it is stated that, in multi-party conversation (as for both user and agent, a plurality of participants exists), a mechanism is configured such that each of agent systems responds only in the case where the agent system has been spoken to.

### [Citation List]

### [Non Patent Literature]

[NPL 1]
Yumak, Zerrin, et al. "Modelling multi-party interactions among virtual characters, robots, and humans." Presence: Teleoperators and Virtual Environments 23.2 (2014): 172-190.

### [Summary]

### [Technical Problem]

An object of the present technology is to achieve an agent system capable of, in multi-party conversation, actively participating in the conversation.

### [Solution to Problem]

The concept of the present technology lies in an information processing device including a response class decision unit that decides a response class on the basis of information associated with whether or not a user is attempting to talk with a system and associated with whether or not a possibility that the system has a capability of correctly responding to an utterance of the user is high, and a response generation unit that generates a response on the basis of the decided response class. When the user is not attempting to talk with the system and the possibility that the system has the capability of correctly responding to the utterance of the user is high, the response class decision unit decides a response class for proposing an executable task as the response class.

In the present technology, the response class is decided by the response class decision unit on the basis of the information associated with whether or not the user is attempting to talk with the system and associated with whether or not the possibility that the system has the capability of correctly responding to the utterance of the user is high. In this case, when the user is not attempting to talk with the system and the possibility that the system has the capability of correctly responding to the utterance of the user is high, a response class for proposing an executable task is decided as the response class. The response is generated by the response generation unit on the basis of the decided response class.

In this way, in the present technology, when the user is not attempting to talk with the system and the possibility that the system has the capability of correctly responding to the utterance of the user is high, a response class for proposing an executable task is decided as the response class, and then, a response according to the response class is generated. Thus, an agent system capable of, in multi-party conversation, actively participating in the conversation can be achieved.

Further, in the present technology, for example, the configuration may be made such that the response class decision unit decides the response class for each of conversation groups, the response generation unit generates a response for each of the conversation groups, and the information processing device further includes a conversation group estimation unit that estimates the conversation groups by grouping users for each of conversations. This configuration makes it possible to make an appropriate response for each of the conversation groups.

In this case, for example, the information processing device may further include a topic estimation unit that estimates a topic for each of the estimated conversation groups on the basis of text data regarding a conversation of the conversation group. In this case, for example, the information processing device may further include an integration appropriateness determination unit that determines appropriateness of integration of conversation groups on the basis of the topics estimated for the respective conversation groups. Determining the appropriateness of the integration in this way makes it possible to determine that integration of conversation groups having a common topic is appropriate.

Further, in this case, for example, the integration appropriateness determination unit may determine the appropriateness of the integration of the conversation groups on the basis of a person attribute of each of member users of each of the conversation groups. Further, in this case, for example, the integration appropriateness determination unit may estimate, for each of the conversation groups, a group attribute by use of the person attributes of the member users and determine the appropriateness of the integration of the conversation groups on the basis of the estimated group attributes. This configuration makes it possible to determine that integration of conversation groups that is not unintended by users is inappropriate.

Further, in this case, for example, when it is determined that the integration of the conversation groups is appropriate, the response generation unit may generate the response in such a way that a speech output for prompting the integration is performed. This configuration makes it possible to actively participate in the conversations and promote the integration of the conversation groups.

Further, in this case, for example, the integration appropriateness determination unit may further determine appropriateness of integration of a user not constituting any one of the conversation groups into one of the conversation groups. When it is determined that the integration of the user not constituting any one of the conversation groups into one of the conversation groups is appropriate, the response generation unit may generate the response in such a way that a speech output for prompting the integration is performed. This configuration makes it possible to actively participate in the conversations and promote the integration of the user not constituting any one of the conversation groups into one of the conversation groups.

Further, in this case, for example, the response generation unit may generate the response in such a way that a screen display for each of the estimated conversation groups is performed. This configuration makes it possible to appropriately make a screen presentation of information for each of the conversation groups.

### [Advantageous Effect of the Invention]

The present technology enables the achievement of an agent system capable of, in multi-party conversation, actively participating in the conversation. Note that the effect of the present technology is not necessarily limited to the effect described above and may be any of effects described in the present disclosure.

### [Brief Description of Drawings]

[FIG. 1]

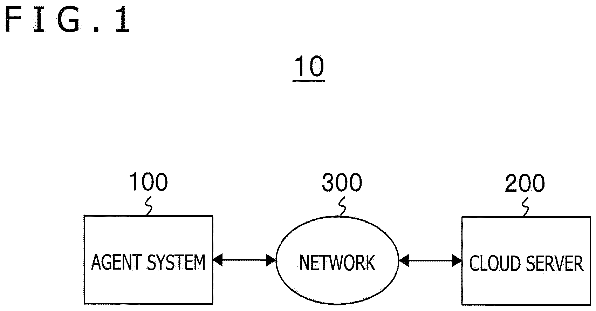

   FIG. 1 is a block diagram illustrating a configuration example of an information processing system as an embodiment.
[FIG. 2]

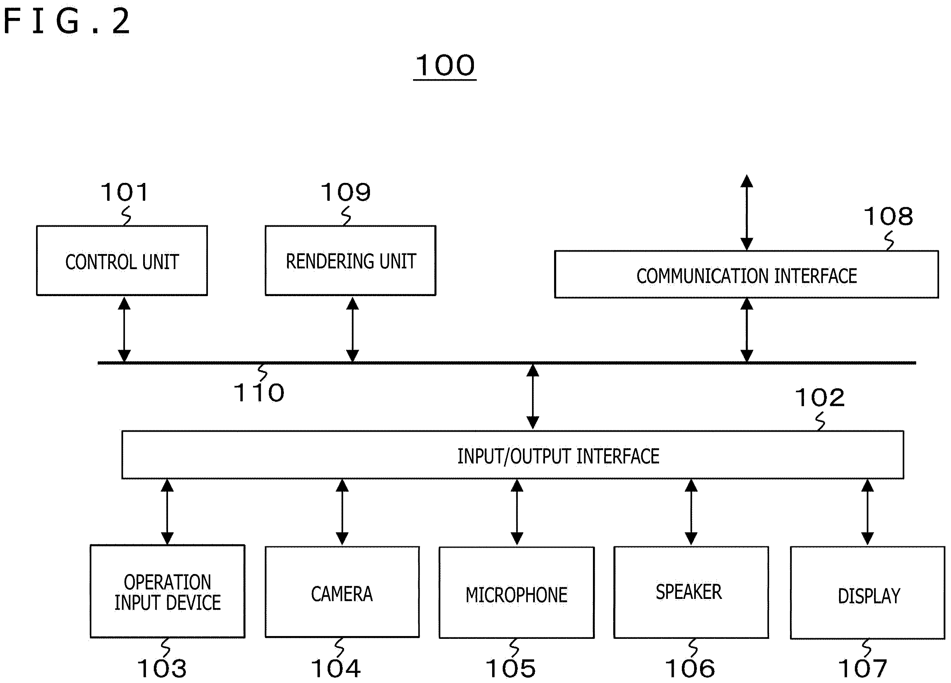

   FIG. 2 is a block diagram illustrating a configuration example of an agent system.
[FIG. 3]

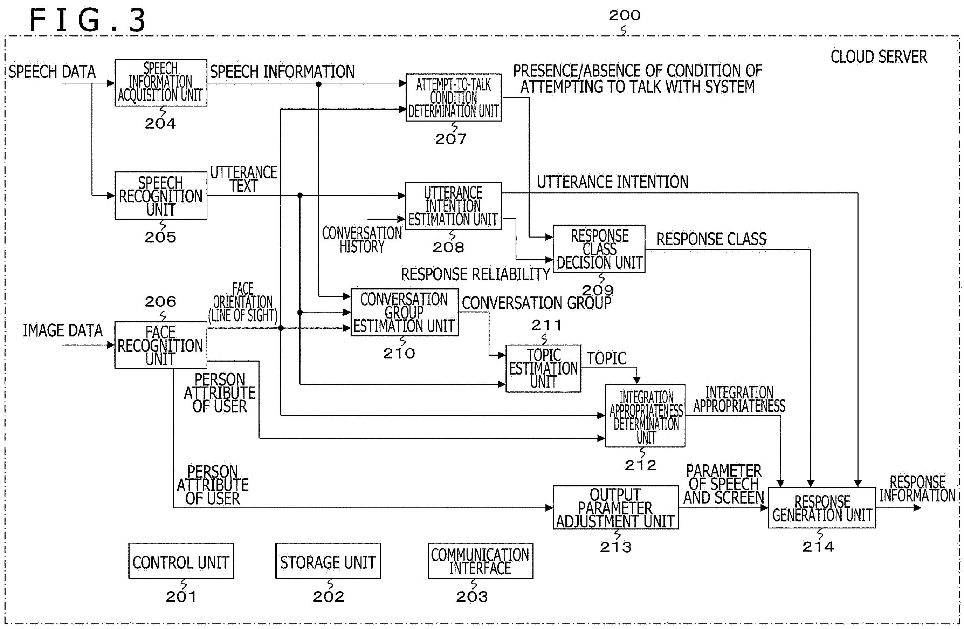

   FIG. 3 is a block diagram illustrating a configuration example of a cloud server.
[FIG. 4]

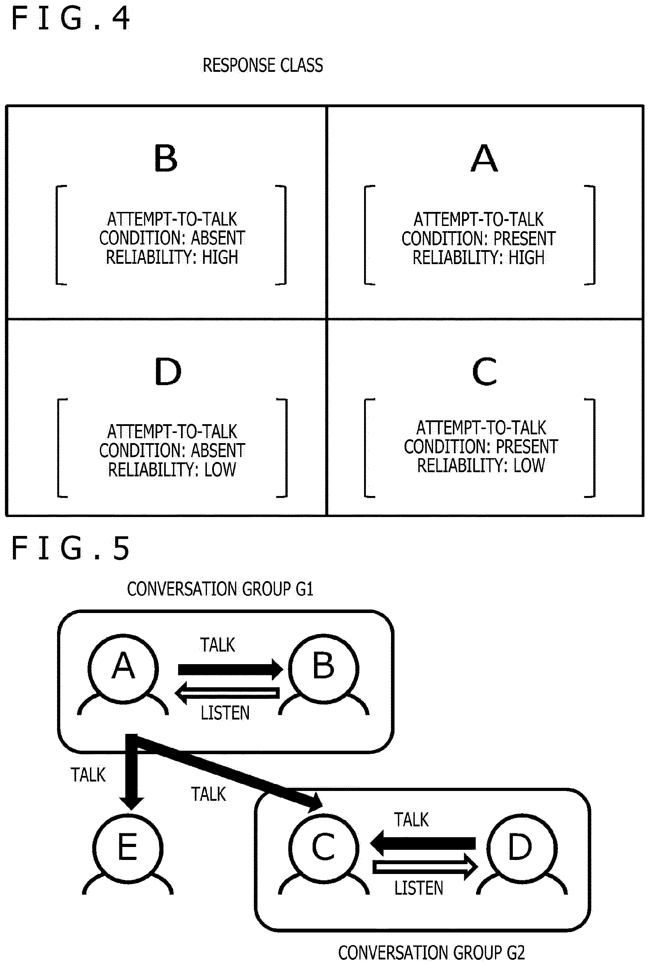

   FIG. 4 is a diagram illustrating a list of response classes.
[FIG. 5]
   FIG. 5 is a diagram for describing estimation of conversation groups.
[FIG. 6]

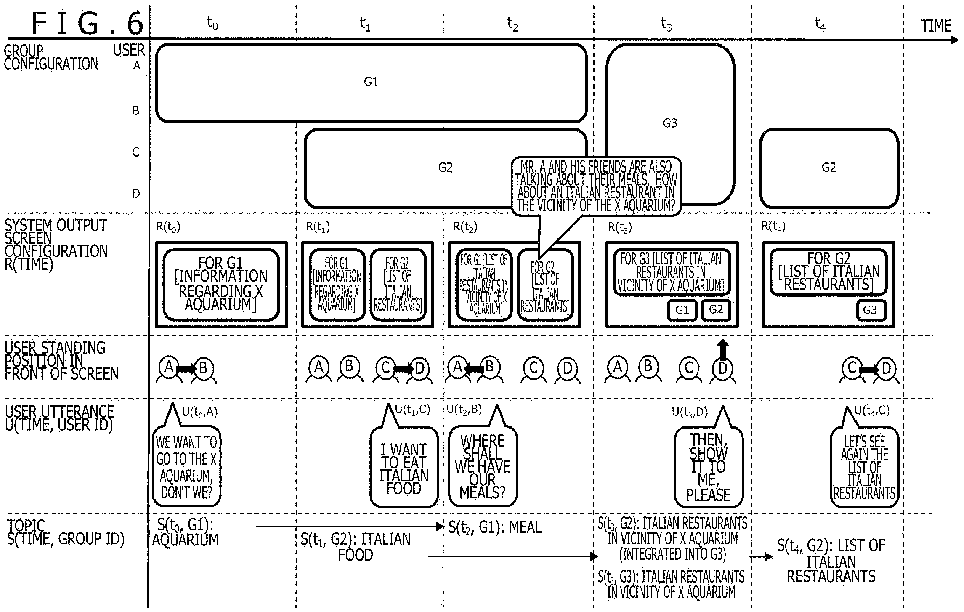

   FIG. 6 is a diagram illustrating an example of transitions of a conversation group, a topic, a screen configuration, and the like in an utterance time series (an image at home).
[FIG. 7]

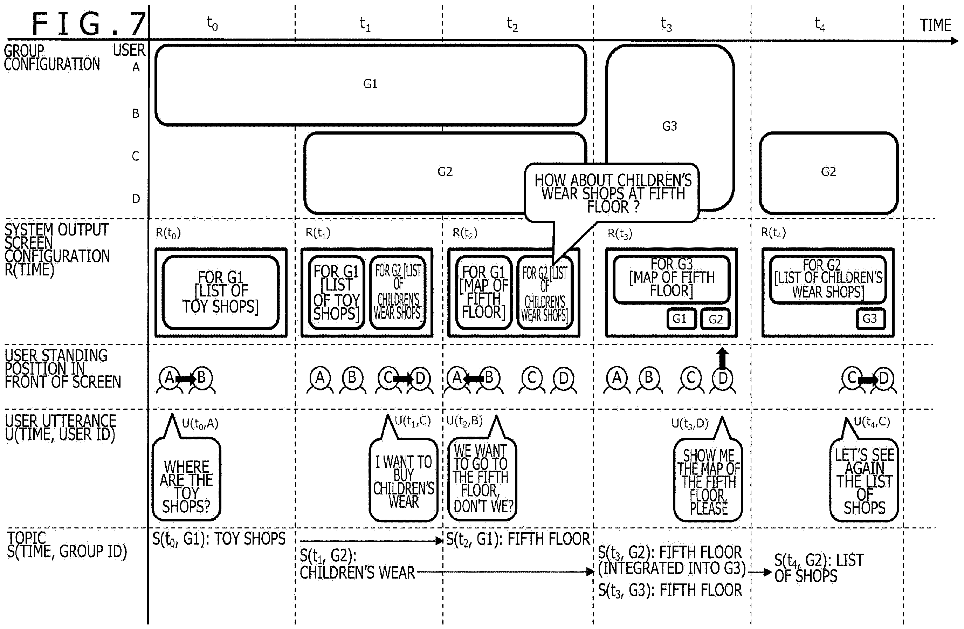

   FIG. 7 is a diagram illustrating an example of transitions of a conversation group, a topic, a screen configuration, and the like in an utterance time series (an image at a public place).
[FIG. 8]

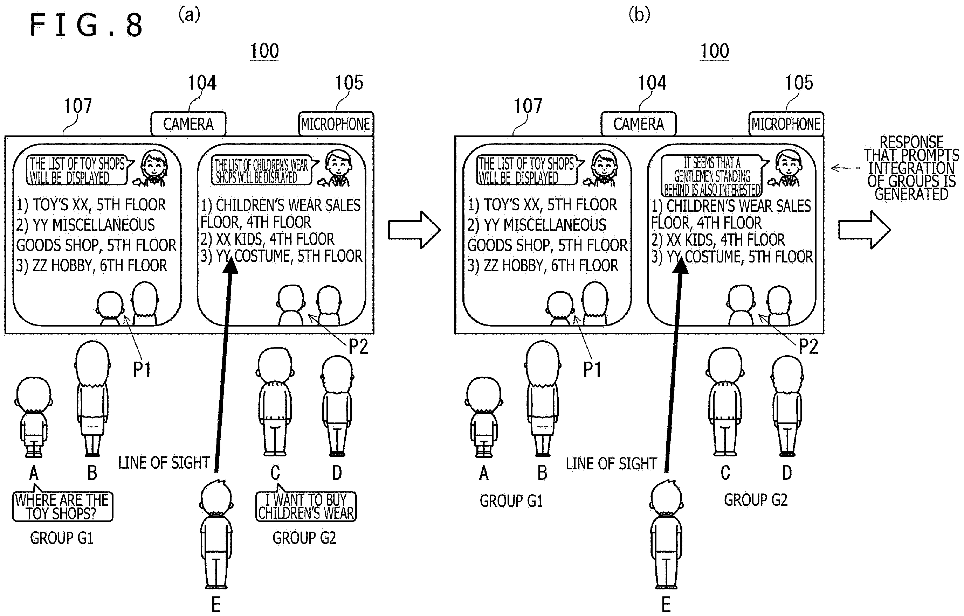

   FIG. 8 depicts diagrams for describing an example of integration of a user not constituting any one of conversation groups into one of the conversation groups.
[FIG. 9]

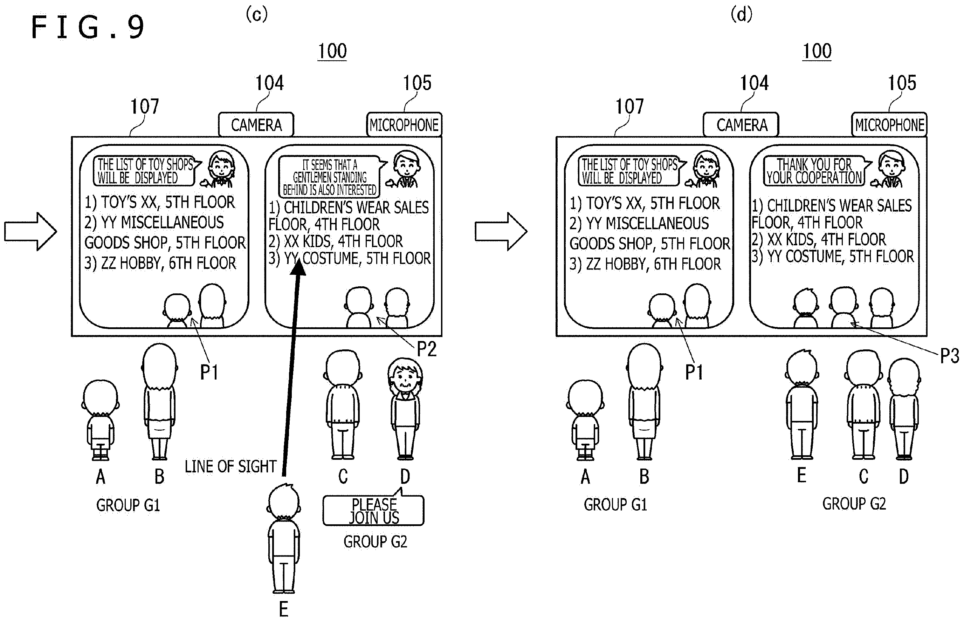

   FIG. 9 depicts diagrams for describing an example of integration of a user not constituting any one of conversation groups into one of the conversation groups.
[FIG. 10]

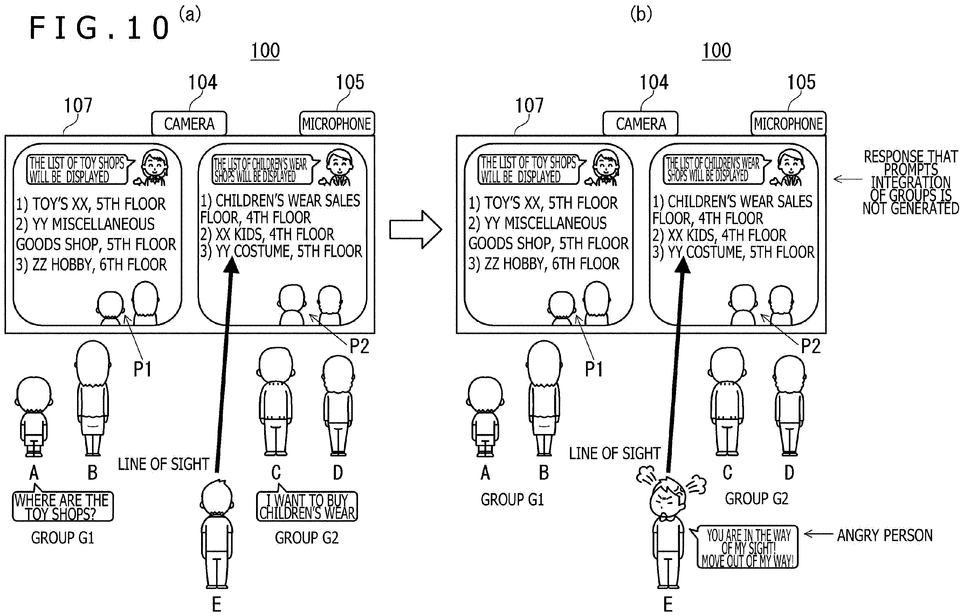

   FIG. 10 depicts diagrams for describing an example of integration of a user not constituting any one of conversation groups into one of the conversation groups.

### [Description of Embodiments]

Hereinafter, a mode of carrying out the present invention (hereinafter referred to as an "embodiment") will be described. Here, the description will be made in the following order.
1. Embodiment
2. Modification example

### <1. Embodiment>

### [Configuration example of information processing system]

FIG. 1 illustrates a configuration example of an information processing system 10 as an embodiment. This information processing system 10 is configured such that an agent system 100 and a cloud server 200 are connected to each other via a network 300 such as the Internet.

The agent system 100 performs such behaviors as an execution of a task instructed by a user and a conversation with the user. The agent system 100 generates a response on the basis of a response class decided on the basis of information associated with whether or not the user is attempting to talk with the system and associated with whether or not a possibility that the system has a capability of correctly responding to an utterance of the user is high and then outputs the generated response.

The agent system 100 transmits image data and speech data associated with the user and having been acquired by a camera and a microphone to the cloud server 200 via the network 300. The cloud server 200 processes the image data and the speech data to acquire response information and transmits the response information to the agent system 100 via the network 300. The agent system 100 performs a speech output and a screen output to the user on the basis of the response information.

### [Configuration example of agent system]

FIG. 2 illustrates a configuration example of the agent system 100. The agent system 100 includes a control unit 101, an input/output interface 102, an operation input device 103, a camera 104, a microphone 105, a speaker 106, a display 107, a communication interface 108, and a rendering unit 109. The control unit 101, the input/output interface 102, the communication interface 108, and the rendering unit 109 are connected to a bus 110.

The control unit 101 includes a CPU (Central Processing Unit), a ROM (Read Only Memory), a RAM (Random access memory), and other components and controls operations of individual portions of the agent system 100. The input/output interface 102 connects the operation input device 013, the camera 104, the microphone 105, the speaker 106, and the display 107 to one another. The operation input device 103 configures an operation unit with which an operator of the agent system 100 performs various input operations.

The camera 104 images a user located, for example, in front of an agent and acquires image data. The microphone 105 detects an utterance of a user and acquires speech dada. The speaker 106 performs a speech output serving as a response output to the user. The display 107 performs a screen output serving as a response output to the user.

The communication interface 108 communicates with the cloud server 200 via the network 300. The communication interface 108 transmits, to the cloud server 200, the image data having been acquired by the camera 104 and the speech data having been acquired by the microphone 105. Further, the communication interface 108 receives the response information from the cloud server 200. The response information includes speech response information for use in responding using the speech output, screen response information for use in responding using the screen output, and the like.

The rendering unit 109 performs rendering (sound effect generation, speech synthesis, animation composition, and the like) on the basis of the response information transmitted from the cloud server 200, supplies a generated speech signal to the speaker 106, and supplies a generated video signal to the display 107. Here, the display 107 may be a projector.

### "Configuration example of cloud server"

FIG. 3 illustrates a configuration example of the cloud server 200. The cloud server 200 includes a control unit 201, a storage unit 202, a communication interface 203, a speech information acquisition unit 204, a speech recognition unit 205, and a face recognition unit 206. Further, the cloud server 200 includes an attempt-to-talk condition determination unit 207, an utterance intention estimation unit 208, a response class decision unit 209, a conversation group estimation unit 210, a topic estimation unit 211, an integration appropriateness determination unit 212, an output parameter adjustment unit 213, and a response generation unit 214.

The control unit 201 includes a CPU (Central Processing Unit), a ROM (Read Only Memory), a RAM (Random access memory), and other components and controls operations of individual portions of the cloud server 200. The storage unit 202 includes a semiconductor memory, a hard disk, or the like. The storage unit 202 stores therein, for example, conversation history information. In the present embodiment, the conversation history information includes (1) information regarding the presence/absence of a condition of attempting to talk with the system, (2) information regarding an utterance intention and response reliability, (3) information regarding a response class, (4) information regarding conversation groups, (5) information regarding a topic for each conversation group, (6) information regarding appropriateness of integration of conversation groups, (7) information regarding parameters for speech and screen outputs, (8) response information, and any other kind of history information.

The communication interface 203 communicates with the agent system 100 via the network 300. The communication interface 203 receives the image data and the speech data that are transmitted from the agent system 100. Further, the communication interface 203 transmits, to the agent system 100, the response information (the speech response information, the screen response information, and the like) for use in responding to a user.

The speech information acquisition unit 204 analyzes the speech data and acquires speech information (a pitch, a power level, a talk speed, an utterance duration length, and the like) regarding an utterance of each user. The speech recognition unit 205 performs a speech recognition process on the speech data and acquires utterance text information.

The face recognition unit 206 performs a face recognition process on the image data to detect a face of each user existing within an image, which is a field of view of the agent; performs an image analysis process on an image of the detected face of each user to detect a face orientation of the user; and outputs information regarding the detected face orientation of the user. Note that it can also be considered that the face recognition unit 206 detects a line of sight instead of the face orientation and outputs information regarding the line of sight, but the following description will be made on the assumption that the information regarding the face orientation is used.

Further, the face recognition unit 206 performs an image analysis process on the image of the detected face of each user to acquire information regarding person attributes of the user. This information regarding the person attributes includes not only information regarding age, gender, and the like, but also information regarding such an emotion as anger or smile. Note that, in the present embodiment, it is assumed that the information regarding the person attributes of each user is acquired by analyzing the image of the face of the user, but it can also be considered that the information regarding the person attributes of each user is acquired by additionally referring to the speech information associated with the utterance of the user and acquired by the speech information acquisition unit 204, the text information associated with the utterance of the user and acquired by the speech recognition unit 205, and any other helpful information.

For example, for estimation of the person attributes (age, gender, and the like) of a user, an existing technique can be used which is based on machine learning using features of a face image (namely, texture, color, and the like on a skin surface). Further, for example, for estimation of such a user's emotion as anger, an existing technique can be used which is based on machine learning using linguistic features (words) included in an utterance and interactive features (an utterance duration length, a back-channel feedback frequency, and the like).

The attempt-to-talk condition determination unit 207 determines whether or not each user is attempting to talk with the system (the agent system 100) on the basis of the speech information associated with the user and acquired by the speech information acquisition unit 204 and the information associated with the face orientation of the user and acquired by the face recognition unit 206. The attempt-to-talk condition determination unit 207 can be configured to use an existing technique that determines whether or not a user is attempting to talk with the system by handling, for example, the speech information and the face orientation information as amounts of characteristic and applying a machine-learning based technique, and that outputs information regarding the presence/absence of the condition of attempting to talk with the system.

The utterance intention estimation unit 208 estimates an utterance intention of a user on the basis of the utterance text information (for one utterance) acquired by the speech recognition unit 205 and the conversation history information (for example, for a predetermined number of immediately prior utterances) stored in the storage unit 202 and outputs information regarding the estimated utterance intention.

Here, examples of the utterance text information include "I want to eat Italian food" and the like. Further, examples of the utterance intention of a user include a restaurant search, a weather forecast inquiry, an airline ticket reservation, and the like. For example, in the case where the utterance text information is "I want to eat Italian food," it is estimated that the utterance intention of the user is "a restaurant reservation."

Further, the utterance intention estimation unit 208 estimates response reliability with respect to a result of the estimation of the utterance intention of a user and outputs information regarding the estimated response reliability. The response reliability is represented by, for example, a value larger than or equal to 0 but smaller than or equal to 1. This reliability represents a possibility of being capable of correctly responding to an utterance of a user.

The response class decision unit 209 decides a response class on the basis of the information associated with the presence/absence of a condition of attempting to talk with the system and acquired by the attempt-to-talk condition determination unit 207 and the information associated with the response reliability and acquired by the utterance intention estimation unit 208 and outputs information regarding the decided response class.

FIG. 4 illustrates a list of response classes. When the condition of attempting to talk with the system is present and the response reliability is high, the response class decision unit 209 decides a response class "A" as the response class. This response class "A" is a class associated with a behavior "a task corresponding to the utterance intention of the user is instantly executed."

Further, when the condition of attempting to talk with the system is absent (a user is in a condition of talking with another user other than the system or is in a condition of talking alone) and the response reliability is high, the response class decision unit 209 decides a response class "B" as the response class. This response class "B" is a class associated with a behavior "an executable task corresponding to the utterance intention of the user is proposed." In this case, after the proposal of the executable task, only in the case where the user permits the execution of the task, the task is executed.

Further, when the condition of attempting to talk with the system is present and the response reliability is low, the response class decision unit 209 decides a response class "C" as the response class. This response class "C" is a class associated with a behavior "a noun phrase included in the utterance of the user is converted into question-form wording and an utterance using such wording is returned to the user." This behavior is performed to prompt a re-utterance of the user. Moreover, when the condition of attempting to talk with the system is absent and the response reliability is low, the response class decision unit 209 decides a response class "D" as the response class. This response class "D" is a class associated with no behavior, that is, "nothing is executed."

The conversation group estimation unit 210 estimates who is attempting to talk with whom (a single person or a plurality of persons), and who (a single person or a plurality of persons) is listening to whom, on the basis of the speech information associated with each user and acquired by the speech information recognition unit 204, the information associated with the face orientation of the each user and acquired by the face recognition unit 206, and the utterance text information acquired by the speech recognition unit 205; estimates conversation groups on the basis of the result of the above estimation; and outputs information regarding the estimated conversation groups.

In this case, in the case where a person (a plurality of persons) with whom a talker is attempting to talk is listening to the talker, the talker and the person (the plurality of persons) listening to the talker are estimated to belong to the same conversation group. Further, in the above case, a person (a plurality of persons) who is not listening to the talker or is listening to a different talker is estimated not to belong to the same conversation group as that of the talker.

For example, in an example of FIG. 5, in the case where a person A is a talker and a person B is listening to the person A, a conversation group G1 is estimated which includes the person A and the person B as group members thereof. In this case, the person A is further attempting to talk with a person E and a person C, but the person E is not listening to the person A and the person C is listening to a different person D. Thus, it is estimated that the person E and the person C are not members of the conversation group G1. Further, in the example of FIG. 5, in the case where the person C is a talker and the person D is listening to the person C, a conversation group G2 is estimated which includes the person C and the person D as group members thereof.

Further, the conversation group estimation unit 210 reconfigures conversation groups as needed every time any one of users makes an utterance. In this case, basically, conversation groups having been configured at the time of an immediately prior utterance are inherited, but in the case where any one of members of a conversation group has come to belong to a different conversation group, existing conversation groups are disbanded. Further, in this case, in the case where a new utterance has been made in a certain conversation group, but in a different conversation group, no one has made an utterance and no secession has occurred in group members thereof, the different conversation group is maintained.

The topic estimation unit 211 estimates a topic for each conversation group on the basis of the utterance text information acquired by the speech recognition unit 205 and the conversation group information acquired by the conversation group estimation unit 210 and outputs information regarding the estimated topic for the conversation group. In this case, an existing technique can be used which uses, for example, category names (cooking/gourmet, travel, and the like) of community sites as topics and estimates a topic by handling an N-gram model of words included in an utterance as an amount of characteristic and applying a machine-learning based technique.

In this case, for example, a noun phrase included in an utterance may also be used as a topic. Examples of this use of a noun phrase include the use of "Italian food" of "I want to eat Italian food" as a topic included in a subclass of "cooking/gourmet," and the like. Further, in this case, the topic classification may be made even in view of, for example, which of an utterance for expressing a positive opinion and an utterance for expressing a negative opinion the utterance is.

The integration appropriateness determination unit 212 determines appropriateness of integration of conversation groups on the basis of the information regarding a topic for each conversation group and acquired by the topic estimation unit 211 and outputs information regarding the determined appropriateness of the integration of the conversation groups. In this case, in the case where there are groups whose topics coincide with each other, the integration of the groups is determined to be appropriate.

In addition, in this case, in a situation in which a large number of unspecified users exist, an ingenuity may be made so as to prevent integration of conversation groups that is not desired by users. The appropriateness of integration of groups may be determined by taking into consideration, for example, not only the topic, but also the information associated with the person attributes of each user and acquired by the face recognition unit 206 (namely, the information regarding age, gender, and the like, and the information regarding such an emotion as anger) and a group attribute estimated from the person attributes (namely, a husband and a wife, a parent and a child, lovers, friends, or the like).

The following Table 1 indicates an example of table information for use in the estimation of a group attribute using the person attributes of group members. This table information is stored in advance in, for example, the ROM included in the control unit 201.

### [Table 1]

**Table 1: Example of estimation of group attribute using members' person attributes**

| | Adult | | | | | | Child | | Estimated group attribute |
|---|---|---|---|---|---|---|---|---|---|
| | Old age (60 years old and over) | | Middle age (40-59 years old) | | Young-adult age (20-39 years old) | | | | |
| | Men | Women | Men | Women | Men | Women | Men | Women | |
| Number of members | 1 | 1 | 0 | 0 | 0 | 0 | 0 | 0 | Lovers or husband and wife |
| | ... | | | | | | | | |
| | 1 | 0 | 0 | 0 | 0 | 0 | 1 | 0 | Grandparent and grandchild |
| | ... | | | | | | | | |
| | 0 | 0 | 0 | 1 | 0 | 0 | 0 | 2 | Parent and children |
| | ... | | | | | | | | |
| | 0 | 0 | 1 | 1 | 0 | 0 | 1 | 1 | Family |
| | ... | | | | | | | | |
| | 0 | 0 | 0 | 0 | 1 | 1 | 0 | 0 | Lovers or husband and wife |
| | ... | | | | | | | | |
| | 0 | 0 | 0 | 0 | 2 | 1 | 0 | 0 | Friends |
| | ... | | | | | | | | |

For example, in the case where the members of a group include an adult and old-aged pair of a man and a woman, the group attribute of the group is estimated to be "lovers" or "a husband and a wife." Further, for example, in the case where the members of a group include an adult and old-aged man and a child who is a male child, the group attribute of the group is estimated to be "a grandparent and a grandchild." Further, for example, in the case where the members of a group include an adult and middle-aged woman and a child who is a female child, the group attribute of the group is estimated to be "a parent and a child."

Further, in the case where the members of a group include an adult and middle-aged pair of a men and a women and children who are male and female children, the group attribute of the group is estimated to be "a family." Further, in the case where the members of a group include an adult and young-adult-aged pair of a man and a woman, the group attribute of the group is estimated to be "lovers" or "a husband and a wife." Further, in the case where the members of a group include three or more young-adult-aged men and women, the group attribute of the group is estimated to be "friends."

In the estimation of the appropriateness of integration of groups, in the case where not only the topic but also the above-described information regarding a group attribute and users' emotions is taken into consideration, for example, an affinity between the groups that is acquired from the information regarding the group attribute and the users' emotions is referred to, and the integration of the groups is estimated to be appropriate in the case where the affinity is high whereas, in contrast, the integration of the groups is estimated to be inappropriate in the case where the affinity is low.

The following Table 2 indicates an example of table information for use in determining an affinity between groups that is acquired from the information regarding the group attribute and the users' emotions. This table information is stored in advance in, for example, the ROM included in the control unit 201.

### [Table 2]

**Table 2: Example of affinities among groups**

| | | | | | | | |
|---|---|---|---|---|---|---|---|
| | Family | Parent and child | Grandparent and grandchild | Lovers or husband and wife | Friends | There is an angry person | ... |
| Family | 1 | 1 | 1 | 0 | 0 | 0 | |
| Parent and child | - | 1 | 1 | 0 | 0 | 0 | |
| Grandparent and grandchild | - | - | 1 | 0 | 0 | 0 | |
| Lovers or husband and wife | - | - | - | 0 | 0 | 0 | |
| Friends | - | - | - | - | 1 | 0 | |
| There is an angry person | - | - | - | - | - | 0 | |
| ... | | | | | | | |

| | | | | | | | |
|---|---|---|---|---|---|---|---|
| (0 = low affinity, 1 = high affinity) | | | | | | | |

For example, it is determined that, with respect to a conversation group whose group attribute is "a family," other conversation groups whose group attributes are "a family," "a parent and a child," and "a grandparent and a grandchild" have a high affinity. Further, it is determined that, with respect to a conversation group whose group attribute is "a family," other conversation groups whose group attributes are "lovers or a husband and a wife" and "friends" have a low affinity. Further, it is determined that, with respect to a conversation group whose group attribute is "a family," another conversation group in which there is an angry member has a low affinity.

Further, for example, it is determined that, with respect to a conversation group whose group attribute is "a parent and a child," other conversation groups whose group attributes are "a parent and a child" and "a grandparent and a grandchild" have a high affinity. Further, it is determined that, with respect to a conversation group whose group attribute is "a parent and a child," other conversation groups whose group attributes are "lovers or a husband and a wife" and "friends" have a low affinity. Further, it is determined that, with respect to a conversation group whose group attribute is "a parent and a child," another conversation group in which there is an angry member has a low affinity.

Further, for example, it is determined that, with respect to a conversation group whose group attribute is "a grandparent and a grandchild," another group whose group attribute is "a grandparent and a grandchild" has a high affinity. Further, it is determined that, with respect to a conversation group whose group attribute is "a grandparent and a grandchild," other conversation groups whose group attributes are "lovers or a husband and a wife" and "friends" have a low affinity. Further, it is determined that, with respect to a conversation group whose group attribute is "a grandparent and a grandchild," another conversation group in which there is an angry member has a low affinity.

Further, for example, it is determined that, with respect to a conversation group whose group attribute is "lovers or a husband and a wife," other conversation groups whose group attributes are "lovers or a husband and a wife" and "friends" have a low affinity. Further, it is determined that, with respect to a conversation group whose group attribute is "lovers or a husband and a wife," another group in which there is an angry member has a low affinity.

Further, for example, it is determined that, with respect to a conversation group whose group attribute is "friends," another group whose group attribute is "friends" has a high affinity. Further, it is determined that, with respect to a conversation group whose group attribute is "friends," another group in which there is an angry member has a low affinity.

Further, it is determined that, with respect to a conversation group in which there is an angry member, another group in which there is an angry member has a low affinity.

Further, the integration appropriateness determination unit 212 determines not only the appropriateness of the integration of conversation groups, but also the appropriateness of integration of a user not constituting any one of conversation groups into one of the conversation groups. In this case, the integration appropriateness determination unit 212 determines the appropriateness of the integration of the user not constituting any one of conversation groups into one of the conversation groups on the basis of the information associated with the face orientation of the user and acquired by the face recognition unit 206 and the information associated with the person attributes of the user (which include not only age, gender, and the like, but also such an emotion as anger or smile). For example, when the face orientation of a user not constituting any one of conversation groups is in a condition of looking at a screen output associated with a certain conversation group, the integration of the user into the conversation group is determined to be appropriate.

The output parameter adjustment unit 213 adjusts parameters for the speech output and the screen output on the basis of the information associated with the person attributes of each user and acquired by the face recognition unit 206 and outputs information regarding the adjusted parameters for the speech output and the screen output. Here, the parameters for the speech output include a sound volume, a talk speed, and the like. Further, the parameters for the screen output include a character size, a character font, a character type, a color scheme (for characters and a background), and the like.

Note that, for the information regarding the person attributes of each user, in addition to the attribute information associated with age, gender, and the like and acquired by the face recognition unit 206, psychological attributes (a hobby, taste, and the like) and behavioral attributes (a product purchase history and the like), such as those used in customer segmentation in marketing, may be used.

For example, in the case where a user is an elder, the sound volume of the speech output is made large, and the talk speed is made slow. Further, for example, in the case where a user is an elder, the character size of the screen output is made large, and yellow is not used as the character color. Further, for example, in the case where a user is a child, the use of Chinese characters is made restrictive. Further, for example, in the case where a user is a female, a rounded font is used, and a pale color is used as a background.

The response generation unit 214 generates the response information on the basis of the information associated with the utterance intention and acquired by the utterance intention estimation unit 208, the information associated with the response class and acquired by the response class decision unit 209, the information associated with the integration appropriateness and acquired by the integration appropriateness determination unit 212, and the information associated with the parameters for the speech output and the screen output and acquired by the output parameter adjustment unit 213. The response information includes speech response information for use in the speech output of the response, screen response information for use in the screen output of the response, and the like.

In this case, the response generation unit 214 performs processing for generating response information for each of the response classes. For example, in the case of the response class "A," speech response information is generated which is for use in a system utterance for informing of completion of execution of a task (for example, a search for restaurants) corresponding to the intention of an utterance of a user, and screen response information is generated which is for use in a screen output of a task execution result (for example, a list of restaurants). In this case, for example, in the case where the task corresponding to the intention of an utterance of a user is "a search for nearby Italian restaurants," speech response information is generated which is for use in a system utterance "The search for nearby Italian restaurants has been completed."

Further, for example, in the case of the response class "B," speech response information is generated which is for use in a system utterance for proposing the execution of a task corresponding to the intention of an utterance of a user. In this case, for example, in the case where the task corresponding to the intention of an utterance of a user is "a search for nearby Italian restaurants," speech response information is generated which is for use in a system utterance "Shall I search for nearby Italian restaurants?"

Further, for example, in the case of the response class "C," speech response information is generated which is for use in a system utterance using wording having been obtained by extracting an noun phrase from an utterance of a user and converting the noun word into question-form wording (that is, adding "Do you want ... ?" or the like to the noun phrase). In this case, for example, in the case where the utterance of a user is "I want to eat Italian food," speech response information is generated which is for use in a system utterance "Do you want Italian food?"

Further, in this case, the response generation unit 214 generates response information for use in a case where the integration of conversation groups or the integration (addition) of a user not constituting any one of conversation groups into one of the conversation groups has been determined to be appropriate. In this case, speech response information for a system utterance for promoting integration is generated. In this case, for example, no utterance for prompting the integration is output at a timing of the response class "A" because a task is instantly executed, but the utterance for prompting the integration is output at a timing of each of the response classes "B" to "D."

Examples of the system utterance for prompting the integration are as follows.
(1) "Mr. A and his friends are also talking about their meals."
(2) "The group next to us is also talking about the fifth floor."
(3) "Let's talk about our meals (Let's see the map of the fifth floor)."

Further, the response generation unit 214 may be configured to generate screen response information in such a way as to segment the screen into display regions for individual conversation groups and display mutually different contents within the display regions. Further, the response generation unit 214 may be configured to generate only speech response information for use in a speech output in a case where no screen output is required, on the basis of a topic and an utterance intention (a task) of each conversation group. Examples of this configuration include turning off a screen output for a conversation group whose members are having chats for enjoining only conversations, and the like.

### "Transitions of conversation group and the like in utterance time series (image at home)"

FIG. 6 illustrates an example of transitions of a conversation group, a topic, a screen configuration, and the like in an utterance time series (an image at home). This example assumes a scene in which a plurality of members of a family is making conversations in front of a speech agent installed at home, and a time t advances every time any one of the members makes an utterance. Persons constituting a conversation group are its members, and when even one member has increased or decreased, it is deemed that a different group has been generated.

At a time t0, there is only a conversation group G1, and thus, a screen for the conversation group G1 is full-screen-displayed as a system output (a screen output). In this case, at the time t0, for a reason that a user A is attempting to talk with a user B by making an utterance "We want to go to the X aquarium, don't we?" and the user B is listening to the utterance, the conversation group G1 is estimated which includes the user A and the user B who are the members thereof. In this case, although illustration is omitted, the system has already performed the decision that the response class is the response class "B," the proposal of the execution of a task "a search for the X aquarium" to the conversation group G1, the receipt of an acceptance, and the execution of the task, and is currently in a state of displaying a result of the execution on the screen.

Next, at a time t1, a conversation group G2 is also generated in addition to the conversation group G1. Thus, a screen for the conversation group G1 and a screen for the conversation group G2 are each displayed at a segmented position near its standing position. In this case, at the time t1, for a reason that a user C is attempting to talk with a user D by making an utterance "I want to eat Italian food" and the user D is listening to the utterance, the conversation group G2 is estimated which includes the user C and the user D who are the members thereof. In this case, although illustration is omitted, the system has already performed the decision that the response class is the response class "B," the proposal of the execution of a task "a search for Italian restaurants" to the conversation group G2, the receipt of an acceptance, and the execution of the task, and is currently in a state of displaying a result of the execution on the screen.

Next, at a time t2, it is recognized that the topic of the conversation group G1 has moved to "restaurants in the vicinity of the X aquarium," and a list of restaurants in the vicinity of the X aquarium is displayed as a system output (a screen output) for the screen group G1. In this case, at the time t2, the system has already performed the recognition of an attempt to talk, that is, "Where shall we have our meals?" which has been made to the user A by the user B, the decision that the response class is the response class "B," the proposal of the execution of a task "a search for restaurants in the vicinity of the X aquarium" to the conversation group G1, the receipt of an acceptance, and the execution of the task, and is currently in a state of displaying a result of the execution on the screen.

Moreover, at the time t2, for a reason that the topic of the conversation group G1 has moved to "restaurants," the system determines that the integration of the conversation group G1 with the conversation group G2, which has originally had a topic about the "restaurants," is appropriate. Further, the system makes an utterance for proposing, to the conversation group G2, the integration with the conversation group G1, the utterance being, for example, "Mr. A and his friends are also talking about their meals. How about an Italian restaurant in the vicinity of the X aquarium?"

Next, at a time t3, the system recognizes an attempt to talk, that is, "Then, show it to me, please," which has been made to the system by the conversation group G2 to which the system has proposed the integration with the conversation group G1, and integrates the conversation group G1 and the conversation group G2 into a conversation group G3. In this case, as a system output (a screen output), a screen for the conversation group G3 is full-screen-displayed. In this case, the system has already performed the decision that the response class is the response class "A" (according to the acceptance with respect to the utterance having been made by the system, for proposing the integration with the conversation group G1) and the execution of a task "a search for Italian restaurants in the vicinity of the X aquarium," and is currently in a state of displaying a result of the execution on the screen. In addition, in this case, for example, a screen for the conversation group G1 and a screen for the conversation group G2 are, for example, minimized and are made capable of being referred to when needed.

Next, at a time t4, for a reason that the users A and B constituting the conversation group G3 have moved away from a monitoring region of the system, the conversation group G3 is eliminated, and a state is formed in which only the conversation group G2 including the users C and D who are the members thereof exists. In this case, a screen for the conversation group G2 is widely displayed. Here, although the conversation group G3 is unnecessary as a group (namely, an existence not to be used again), only a screen is allowed to remain in a minimized state because the remaining users C and D who are the members thereof may want to refer to the screen.

### "Transitions of conversation group and the like in utterance time series (image at public place)"

FIG. 7 illustrates an example of transitions of a conversation group, a topic, a screen configuration, and the like in an utterance time series (an image at a public place). This example assumes a scene in which a plurality of users is making conversations in front of a digital signage of a department store, and a time t advances every time any one of the users makes an utterance. Persons constituting a conversation group are its members, and when even one member has increased or decreased, it is deemed that a different group has been generated.

At a time t0, there is only a conversation group G1, and thus, a screen for the conversation group G1 is full-screen-displayed as a system output (a screen output). In this case, at the time t0, for a reason that a user A is attempting to talk with a user B by making an utterance "Where are the toy shops?" and the user B is listening to the utterance, the conversation group G1 is estimated which includes the user A and the user B who are the members thereof. In this case, although illustration is omitted, the system has already performed the decision that the response class is the response class "B," the proposal of the execution of a task "a search for toy shops" to the conversation group G1, the receipt of an acceptance, and the execution of the task, and is currently in a state of displaying a result of the execution on the screen.

Next, at a time t1, a conversation group G2 is also generated in addition to the conversation group G1. Thus, a screen for the conversation group G1 and a screen for the conversation group G2 are each displayed at a segmented position near its standing position. In this case, at the time t1, for a reason that a user C is attempting to talk with a user D by making an utterance "I want to buy children's wear" and the user D is listening to the utterance, the conversation group G2 is estimated which includes the user C and the user D who are the members thereof. In this case, although illustration is omitted, the system has already performed the decision that the response class is the response class "B," the proposal of the execution of a task (a search for children's wear shops) to the conversation group G2, the receipt of an acceptance, and the execution of the task, and is currently in a state of displaying a result of the execution on the screen.

Next, at a time t2, it is recognized that the topic of the conversation group G1 has moved to "fifth floor," and a map of the fifth floor is displayed as a system output (a screen output) for the screen group G1. In this case, at the time t2, the system has already performed the recognition of an attempt to talk, that is, "We want to go to the fifth floor, don't we?" which has been made to the user A by the user B, the decision that the response class is the response class "B," the proposal of the execution of a task "a search for the map of the fifth floor" to the conversation group G1, the receipt of an acceptance, and the execution of the task, and is currently in a state of displaying a result of the execution on the screen.

Moreover, at the time t2, for a reason that the topic of the conversation group G1 has moved to "fifth floor," the system determines that the integration of the conversation group G1 with the conversation group G2, which has originally had a topic about the "children's wear," is appropriate. This is based on an assumption that, in the list of the children's wear shops which has been displayed at the time t1, locations of the children's wear shops are concentrated on the fifth floor, and thus even if "the fifth floor" is selected as a next topic of the group G2, the selection is not strange. Further, the system makes an utterance for proposing, to the conversation group G2, the integration with the conversation group G1, the utterance being, for example, "How about children's wear shops at the fifth floor?"

Next, at a time t3, the system recognizes an attempt to talk, that is, "Show me the map of the fifth floor, please," which has been made to the system by the conversation group G2 to which the system has proposed the integration with the conversation group G1 and integrates the conversation group G1 and the conversation group G2 into a conversation group G3. In this case, as a system output (screen output), a screen for the conversation group G3 is full-screen-displayed. In this case, the system has already performed the decision that the response class is the response class "A" (according to the acceptance with respect to the utterance having been made by the system, for proposing the integration with the conversation group G1) and the execution of a task "a search for the map of the fifth floor," and is currently in a state of displaying a result of the execution on the screen. In this case, for example, a screen for the conversation group G1 and a screen for the conversation group G2 are, for example, minimized and are made capable of being referred to when needed.

Here, in the case of the illustrated example, although both a screen for the conversation group G1 and a screen for the conversation group G3 are illustrated as a "map of fifth floor," it is assumed that the screen "map of fifth floor" for the conversation group G1 is a partial portion constituting the map of the fifth floor and including toy shops, and the screen "map of fifth floor" for the conversation group G3 is the entire portion covering the whole of the map of the fifth floor and including the toy shops and further the children's wear shops.

Next, at a time t4, for a reason that the users A and B constituting the conversation group G3 have moved away from a monitoring region of the system, the conversation group G3 is eliminated, and a state is formed in which only the conversation group G2 including the users C and D who are the members thereof exists. In this case, a screen for the conversation group G2 is widely displayed. Here, although the conversation group G3 is unnecessary as a group (namely, an existence not to be used again), only a screen is allowed to remain in a minimized state because the remaining users C and D who are the members thereof may want to refer to the screen.

### "Integration of a user not constituting any one of conversation groups into one of the conversation groups"

An example of the integration of a user not constituting any one of conversation groups into one of the conversation groups will be described. FIG. 8(a) assumes a scene in which the agent system 100 configures a digital signage of a department store and a plurality of users exists in front of the digital signage. Note that, although, in the illustrated example, only the camera 104, the microphone 105, and the display 107 are illustrated, a processing main portion constituting the agent system 100 and including the control unit 101, the rendering unit 109, and the like, and the speaker 106 constituting the agent system 100 also exist at, for example, the rear side of the display 107.

At a time point of FIG. 8(a), a person A and a person B constitute a conversation group G1, and in response to an attempt to talk, that is, "Where are the toy shops?" which has been made by the person A, the agent system 100 performs a speech output, that is, "A list of toy shops will be displayed" (a screen output is also performed in the illustrated example) and displays the list of toy shops in a segmented region at the left side of the display 107. Note that an image (denoted by an arrow P1) indicating the persons A and B is displayed so as to correspond to the list screen. This configuration enables the persons A and B to easily know that they are included in the members of a conversation group that is a target of the list screen.

Further, at the time point of FIG. 8(a), a person C and a person D constitute a conversation group G2, and in response to an attempt to talk, that is, "I want to buy children's wear," which has been made by the person C, the agent system 100 performs a speech output, that is, "A list of children's wear shops will be displayed" (a screen output is also performed in the illustrated example) and displays the list of children's wear shops in a segmented region at the right side of the display 107. Note that an image (denoted by an arrow P2) indicating the persons C and D is displayed so as to correspond to the list screen. This configuration enables the persons C and D to easily know that they are included in the members of a conversation group that is a target of the list screen.

Further, at the time point of FIG. 8(a), for a reason that it is already detected that the line of sight of a person E who is not constituting any one of the conversation groups is oriented toward the list of children's wear shops displayed in the segmented region at the right side of the display 107, the appropriateness of the integration of the person E into the conversation group G2 is determined in view of person attributes and the like of the person E.

In the case where it has been determined that the integration of the person E into the conversation group G2 is appropriate, as illustrated in FIG. 8(b), a speech output, for example, "It seems that a gentleman standing behind is also interested," which promotes the integration of the person E into the conversation group G2, is performed to the conversation group G2 (a screen output is also performed in the illustrated example).

When, in response to such a speech output from the agent system 100, as illustrated in FIG. 9(c), the person D who is the member of the conversation group G2 makes an attempt to talk, that is, "Please join us," to the person E, so that the person E is integrated into the conversation group G2. FIG. 9(d) illustrates a state after the integration of the person E into the conversation group G2. In this state, an image (denoted by an arrow P3) indicating the person E, in addition to the persons C and D, is displayed so as to correspond to the list screen. This configuration enables the persons C and D and further the person E to easily know that they are included in the members of a conversation group that is a target of the list screen.

Note that the above description has been made with respect to a case where it has been determined that the integration of the person E into the group G2 is appropriate, and in the case where it has been determined that the integration of the person E into the group G2 is inappropriate, no speech output (screen display) for promoting the integration of the person E into the conversation group G2 is performed from the agent system 100.

FIG. 10(a) illustrates the same state as that of the above FIG. 8(a), and the detailed description thereof is omitted here. FIG. 10(b) illustrates a case where, for a reason that the person E is an angry person, it has been determined that the integration of the person E into the conversation group G2 is inappropriate, and no speech output (screen display) for promoting the integration of the person E into the conversation group G2 is performed from the agent system 100.

As described above, the information processing system 10 is capable of changing its behavior at the time of responding to a user on the basis of whether or not the user is attempting to talk with the agent system 100 and the degree of a possibility that the agent system 100 is capable of correctly responding to an utterance of the user (namely, response reliability) is. Thus, the agent system 100 which is capable of, in multi-party conversation, actively participating in the conversation can be achieved.

In this case, even under a condition in which a plurality of human beings exists around the agent system 100 and a situation in which a target of an attempt to talk is not the agent system 100 frequently occurs, the agent system 100 is capable of making a response of a suitable level (that is, instantly executing a task, or proposing a task once and then executing the task when needed) at a suitable timing. When applied to a guidance agent at a shop front, the agent system 100 is capable of, not only when asked face-to-face, but also at a timing that looks like as if it were a well-prepared useful timing during listening to a conversation between customers sideways, making product explanations and sales recommendations.

Further, the information processing system 10 illustrated in FIG. 1 is capable of, in the case where two or more human beings (users) exist within a surrounding region (or a movable region) of the agent system 100, recognizing the group configuration for conversations, and making utterances for inducing group integrations. Thus, the information processing system 10 is capable of creating new exchanges by combining persons who are located near the agent system 100 and are making conversations in different groups, and further is capable of activating conversations by gathering persons who are talking on the same topic.

Further, the information processing system 10 illustrated in FIG. 1 is capable of changing its behavior at the time of responding to a user on the basis of whether or not the user is attempting to talk with the agent system 100 and the degree of a possibility that the agent system 100 is capable of correctly responding to an utterance of the user (namely, response reliability) is, and further is capable of, in a case where two or more human beings (users) exist within a surrounding reason (or a movable region) of the agent system 100, recognizing the group configuration for conversations, and making utterances for inducing group integrations. This configuration, therefore, brings about an effect allowing the agent system 100 to look as if it were actively participating in the conversation, and makes it possible to give an intellectual impression to users. Further, the active approaches from the agent system 100 (namely, proposing a task and inducing the integration of conversation groups) make it possible to give new awareness to users.

Further, the information processing system 10 illustrated in FIG. 1 is capable of communicating with users in a way that is considerate of the users by adjusting a responding method according to the person attributes of users. That is, the information processing system 10 is capable of communicating with users by means of methods (a speech output and a screen output) that are appropriate to the assumed preferences and perceptive-function differences of individual users and that are deemed to be easily accepted by the individual users. This configuration makes the agent system more approachable and easier-to-use.

For example, applying the information processing system 10 to an agent system used at home makes it possible to slow the talk speed of the speech output, enlarge the character size of the screen output, and/or avoid the use of Chinese characters according to whether or not an elder or a child exists among users receiving services from the agent system. This configuration enables the consideration for each family member to be extended, and further enables the each family member to feel the ease of use and the approachability.

### <2. Modification example>

In the above-described embodiment, the configuration is made such that image data and speech data are transmitted from the agent system 100 to the cloud server 200; the cloud server 200 processes the image data and the speech data to obtain response information and return the response information to the agent system 100; and the agent system 100 outputs response outputs (a speech output and a screen output). It can be considered to allow the agent system 100 to perform the whole or part of the processing performed by the cloud server 200.

Further, the preferred embodiment of the present disclosure has been described in detail referring to the accompanying drawings, but the technical scope of the present disclosure is not limited to the example embodiment. It is obvious that those having ordinary knowledge in the technical field of the present disclosure can come up with various changes or modifications within the scope of the technical ideas described in the claims, and naturally, it is to be understood that such changes and modifications also belong to the technical scope of the present disclosure.

Further, the present technology can also have configurations described below.
(1) An information processing device including:
   a response class decision unit that decides a response class on the basis of information associated with whether or not a user is attempting to talk with a system and associated with whether or not a possibility that the system has a capability of correctly responding to an utterance of the user is high; and
   a response generation unit that generates a response on the basis of the decided response class,
   in which, when the user is not attempting to talk with the system and the possibility that the system has the capability of correctly responding to the utterance of the user is high, the response class decision unit decides a response class for proposing an executable task as the response class.
(2) The information processing device according to (1),
   in which the response class decision unit decides the response class for each of conversation groups,
   the response generation unit generates a response for each of the conversation groups, and
   the information processing device further includes a conversation group estimation unit that estimates the conversation groups by grouping users for each of conversations.
(3) The information processing device according to (2), further including:
   a topic estimation unit that estimates a topic for each of the estimated conversation groups on the basis of text data regarding a conversation of the conversation group.
(4) The information processing device according to (3), further including:
   an integration appropriateness determination unit that determines appropriateness of integration of conversation groups on the basis of the topics estimated for the respective conversation groups.
(5) The information processing device according to (5), in which the integration appropriateness determination unit determines the appropriateness of the integration of the conversation groups on the basis of a person attribute of each of member users of each of the conversation groups.
(6) The information processing device according to (5), in which the integration appropriateness determination unit estimates, for each of the conversation groups, a group attribute by use of the person attributes of the member users and determines the appropriateness of the integration of the conversation groups on the basis of the estimated group attributes.
(7) The information processing device according to (5) or (6), in which, when it is determined that the integration of the conversation groups is appropriate, the response generation unit generates the response in such a way that a speech output for prompting the integration is performed.
(8) The information processing device according to any one of (5) to (7),
   in which the integration appropriateness determination unit further determines appropriateness of integration of a user not constituting any one of the conversation groups into one of the conversation groups, and
   when it is determined that the integration of the user not constituting any one of the conversation groups into one of the conversation groups is appropriate, the response generation unit generates the response in such a way that a speech output for prompting the integration is performed.
(9) The information processing device according to any one of (2) to (8), in which the response generation unit generates the response in such a way that a screen display for each of the estimated conversation groups is performed.
(10) An information processing method including:
   a procedure of deciding a response class on the basis of information associated with whether or not a user is attempting to talk with a system and associated with whether or not a possibility that the system has a capability of correctly responding to an utterance of the user is high; and
   a procedure of generating a response on the basis of the decided response class,
   in which, in the procedure of deciding the response class, when the user is not attempting to talk with the system and the possibility that the system has the capability of correctly responding to the utterance of the user is high, a response class for proposing an executable task is decided as the response class.
(11) An information processing device including:
   a conversation group estimation unit that estimates conversation groups by grouping users for each of conversations;
   a response class decision unit that decides a response class for each of the conversation groups on the basis of information associated with whether or not a user is attempting to talk with a system and associated with whether or not a possibility that the system has a capability of correctly responding to an utterance of the user is high; and
   a response generation unit that generates a response for each of the conversation groups on the basis of the response class decided for the conversation group.
(12) The information processing device according to (11), further including:
   a topic estimation unit that estimates a topic for each of the estimated conversation groups on the basis of text data regarding a conversation of the conversation group.
(13) The information processing device according to (12), further including:
   an integration appropriateness determination unit that determines appropriateness of integration of conversation groups on the basis of the topics estimated for the respective conversation groups.
(14) The information processing device according to (13), in which the integration appropriateness determination unit determines the appropriateness of the integration of the conversation groups on the basis of a person attribute of each of member users of each of the conversation groups.
(15) The information processing device according to (14), in which the integration appropriateness determination unit estimates, for each of the conversation groups, a group attribute by use of the person attributes of the member users and determines the appropriateness of the integration of the conversation groups on the basis of the estimated group attributes.
(16) The information processing device according to (14) or (15), in which, when it is determined that the integration of the conversation groups is appropriate, the response generation unit generates the response in such a way that a speech output for prompting the integration is performed.
(17) The information processing device according to any one of (14) to (16),
   in which the integration appropriateness determination unit further determines appropriateness of integration of a user not constituting any one of the conversation groups into one of the conversation groups, and
   when it is determined that the integration of the user not constituting any one of the conversation groups into one of the conversation groups is appropriate, the response generation unit generates the response in such a way that a speech output for prompting the integration is performed.
(18) The information processing device according to any one of (11) to (17), in which the response generation unit generates the response in such a way that a screen display for each of the estimated conversation groups is performed.
(19) An information processing method including:
   a procedure of estimating conversation groups by grouping users for each of conversations;
   a procedure of deciding a response class for each of the conversation groups on the basis of information associated with whether or not a user is attempting to talk with a system and associated with whether or not a possibility that the system has a capability of correctly responding to an utterance of the user is high; and
   a procedure of generating a response for each of the conversation groups on the basis of the response class decided for the conversation group.

### [Reference Signs List]

- 10: Information processing system
- 100: Agent system
- 101: Control unit
- 102: Input/output interface
- 103: Operation input device
- 104: Camera
- 105: Microphone
- 106: Speaker
- 107: Display
- 108: Communication interface
- 109: Rendering unit
- 110: Bus
- 200: Cloud server
- 201: Control unit
- 202: Storage unit
- 203: Communication interface
- 204: Speech information acquisition unit
- 205: Speech recognition unit
- 206: Face recognition unit
- 207: Attempt-to-talk condition determination unit
- 208: Utterance intention estimation unit
- 209: Response class decision unit
- 210: Utterance group estimation unit
- 211: Topic estimation unit
- 212: Integration appropriateness determination unit
- 213: Output parameter adjustment unit
- 214: Response generation unit
- 300: Network

## Claims

1. An information processing device comprising:
a response class decision unit that decides a response class on a basis of information associated with whether or not a user is attempting to talk with a system and associated with whether or not a possibility that the system has a capability of correctly responding to an utterance of the user is high; and
a response generation unit that generates a response on a basis of the decided response class,
wherein, when the user is not attempting to talk with the system and the possibility that the system has the capability of correctly responding to the utterance of the user is high, the response class decision unit decides a response class for proposing an executable task as the response class.

2. The information processing device according to claim 1,
wherein the response class decision unit decides the response class for each of conversation groups,
the response generation unit generates a response for each of the conversation groups, and
the information processing device further includes a conversation group estimation unit that estimates the conversation groups by grouping users for each of conversations.

3. The information processing device according to claim 2, further comprising:
a topic estimation unit that estimates a topic for each of the estimated conversation groups on a basis of text data regarding a conversation of the conversation group.

4. The information processing device according to claim 3, further comprising:
an integration appropriateness determination unit that determines appropriateness of integration of conversation groups on a basis of the topics estimated for the respective conversation groups.

5. The information processing device according to claim 4, wherein the integration appropriateness determination unit determines the appropriateness of the integration of the conversation groups on a basis of a person attribute of each of member users of each of the conversation groups.

6. The information processing device according to claim 5, wherein the integration appropriateness determination unit estimates, for each of the conversation groups, a group attribute by use of the person attributes of the member users and determines the appropriateness of the integration of the conversation groups on a basis of the estimated group attributes.

7. The information processing device according to claim 5, wherein, when it is determined that the integration of the conversation groups is appropriate, the response generation unit generates the response in such a way that a speech output for prompting the integration is performed.

8. The information processing device according to claim 5,
wherein the integration appropriateness determination unit further determines appropriateness of integration of a user not constituting any one of the conversation groups into one of the conversation groups, and
when it is determined that the integration of the user not constituting any one of the conversation groups into one of the conversation groups is appropriate, the response generation unit generates the response in such a way that a speech output for prompting the integration is performed.

9. The information processing device according to claim 2, wherein the response generation unit generates the response in such a way that a screen display for each of the estimated conversation groups is performed.

10. An information processing method comprising:
a procedure of deciding a response class on a basis of information associated with whether or not a user is attempting to talk with a system and associated with whether or not a possibility that the system has a capability of correctly responding to an utterance of the user is high; and
a procedure of generating a response on a basis of the decided response class,
wherein, in the procedure of deciding the response class, when the user is not attempting to talk with the system and the possibility that the system has the capability of correctly responding to the utterance of the user is high, a response class for proposing an executable task is decided as the response class.
